# EUROPÄISCHE PATENTANMELDUNG

(11) **EP 1 876 533 A1**
(43) Veröffentlichungstag der Anmeldung: **09.01.2008**
(21) Anmeldenummer: 07111089.4
(22) Anmeldetag: 26.06.2007
(51) Int. Cl.: G06F 12/02, G07B 17/00

(54) **Anordnung und Verfahren zum Laden von Daten in einen Speicher**

(30) Priorität: 03.07.2006 DE 102006030979
(71) Anmelder: Francotyp-Postalia GmbH, 16547 Birkenwerder (DE)
(72) Erfinder: Rosenau, Dirk, 13469, Berlin (DE); Roth, Sabine, 13156, Berlin (DE)
(74) Vertreter: Cohausz & Florack

(57) **Zusammenfassung**

Die vorliegende Erfindung betrifft ein Verfahren zum Laden von Daten von einer Sendereinrichtung in einen nicht-flüchtigen, nur sektorweise löschbaren Speicher (103.6, 103.9) einer mit der Sendereinrichtung (102) verbindbaren Empfängereinrichtung (103), bei dem in einem Aufteilungsschritt die zu ladenden Daten von der Sendereinrichtung (102) in eine Mehrzahl von Datenpaketen (106.1 bis 106.7) aufgeteilt werden und in einem Ladeschritt (105.15) zumindest ein Teil der Datenpakete (106.1 bis 106.7) in den Speicher (103.6, 103.9) geladen wird. Dabei wird in einem Überprüfungsschritt (105.3), der vor dem Ladeschritt (105.15) durchgeführt wird, ein aktueller Ladezustand des Speichers (103.6, 103.9) überprüft, wobei der aktuelle Ladezustand wiedergibt, ob bereits zumindest ein Teil der Datenpakete (106.1 bis 106.7) in einem vorhergehenden Ladeschritt (105.15) erfolgreich in den Speicher (103.6, 103.9) geladen wurde. Die in dem Ladeschritt (105.15) in den Speicher (103.6, 103.9) zu ladenden Datenpakete (106.1 bis 106.7) werden in Abhängigkeit von dem aktuellen Ladezustand ermittelt.

## Beschreibung

Die vorliegende Erfindung betrifft ein Verfahren zum Laden von Daten von einer Sendereinrichtung in einen nicht-flüchtigen, nur abschnittsweise löschbaren Speicher einer mit der Sendereinrichtung verbindbaren Empfängereinrichtung, bei dem in einem Aufteilungsschritt die zu ladenden Daten von der Sendereinrichtung in eine Mehrzahl von Datenpaketen aufgeteilt werden und in einem Ladeschritt zumindest ein Teil der Datenpakete in den Speicher geladen wird. Sie betrifft weiterhin eine entsprechende Anordnung, welche sich zur Durchführung des erfindungsgemäßen Verfahrens eignet.

Aus dem Bereich der Datenverarbeitung sind eine Vielzahl von Verfahren zur Übertragung von Daten von einem Sender zu einem Empfänger bekannt, welche über verschiedene physikalische Verbindungen (so genannte ISO OSI Schicht 1), wie beispielsweise RS232, IIC, Ethernet, Modem, Funk etc., erfolgen. Übertragungsfehler, welche bei der Übertragung der Daten auftreten, können heute erkannt und sogar korrigiert werden, da auch verschiedenste Datensicherungsschichten (so genannte ISO OSI Schicht 2) bekannt sind. Im Extremfall von Übertragungsfehlern z. B. aufgrund von Verbindungsabbrüchen, können Daten wiederholt und eine abgebrochene Verbindung erneut aufgebaut werden. Intelligente Verfahren können beim Übertragen von Daten eine Synchronisation vornehmen, sodass die Übertragung an der Stelle fortgesetzt werden kann, an der die Unterbrechung auftrat.

Bei einer Reihe von elektronischen Geräten, beispielsweise bei Frankiermaschinen, finden Datenverarbeitungseinheiten in Form so genannter eingebetteter Systeme (embedded system) Anwendung, die speziell auf die Ausführung bestimmter Funktionen zugeschnitten sind. In diesen eingebetteten Systemen finden zum Speichern und schnellen Lesen von großen Datenmengen häufig als integrierter Schaltkreis (so genannter IC) ausgebildete Speicher Anwendung, die sektorweise organisiert sind. Häufig sind dies Speicher, die auf der so genannten FLASH-Technologie basieren. Diese ICs können zufällig, wahlfrei beschrieben (programmiert) aber nur sektorweise gelöscht werden.

Werden große Datenmengen (z. B. die Firmware eines eingebetteten Systems) über einen störungsanfälligen Kanal (z. B. ein Modem oder eine Funkverbindung) von einem Sender an einen Empfänger übertragen und in einen Speicher des Empfängers geschrieben, so werden diese Daten häufig komprimiert übertragen, um die Zeit für die Übertragung und Speicherung zu minimieren. Die Komprimierung wird dabei häufig nicht auf die gesamte Datenmenge angewendet, da sonst große Speicherbereiche zur Dekomprimierung benötigt werden, welche in eingebetteten Systemen meist nicht vorhanden sind. Als Alternative werden die in den Speicher des Empfängers zu ladenden Daten zunächst in Datenpakete segmentiert, die dann komprimiert und anschließend übertragen werden.

Die zeitliche Optimierung der Datenübertragung erfordert, dass die Datenpakete in ihrer Größe unabhängig von den Sektorgrenzen des Speichers des eingebetteten Systems gewählt werden können. Wenn das Beschreiben des sektorweise organisierten Speichers unvorhergesehen abgebrochen wird (z. B. durch Stromabschaltung), befindet sich der zu dem Zeitpunkt beschriebene Speicherbereich in einem nicht deterministischen Zustand. Kommt es daher zu einer solchen außerplanmäßigen Unterbrechung, werden üblicherweise bei einer neuen Kommunikation zwischen dem Sender und dem Empfänger erneut sämtliche Daten übermittelt, was dazu führen kann, dass insbesondere bei sehr instabilen Verbindungen eine vergleichsweise lange Zeit bis zum vollständigen Laden der Daten in den Speicher des Empfängers erforderlich ist.

Der vorliegenden Erfindung liegt daher die Aufgabe zu Grunde, ein Verfahren bzw. eine Anordnung der eingangs genannten Art zur Verfügung zu stellen, welches bzw. welche die oben genannten Nachteile nicht oder zumindest in geringerem Maße aufweist und insbesondere auf einfache Weise ein möglichst zeitoptimiertes Laden von Daten von einer Sendereinrichtung in einen sektorweise organisierten Speicher einer Empfängereinrichtung ermöglicht.

Die vorliegende Erfindung löst diese Aufgabe mit einem Verfahren gemäß Anspruch 1. Sie löst diese Aufgabe weiterhin mit einer Anordnung gemäß Anspruch 16.

Der vorliegenden Erfindung liegt die technische Lehre zu Grunde, dass man ein zeitoptimiertes Laden von Daten von einer Sendereinrichtung in einen sektorweise organisierten Speicher einer Empfängereinrichtung erzielen kann, wenn in einem Überprüfungsschritt, der vor dem Laden der Daten durchgeführt wird, ein aktueller Ladezustand des Speichers überprüft wird, wobei der aktuelle Ladezustand wiedergibt, ob bereits zumindest ein Teil der Datenpakete in einem vorhergehenden Ladeschritt erfolgreich in den Speicher geladen wurde, und die in dem Ladeschritt in den Speicher zu ladenden Datenpakete in Abhängigkeit von dem aktuellen Ladezustand ermittelt werden.

Es hat sich gezeigt, dass auch bei einem sektorweise organisierten Speicher eine einfache Erfassung des Ladezustands des Speichers möglich ist. Durch diese Erfassung und die damit mögliche Überprüfung des Ladezustands des Speichers der Empfängereinrichtung ist es in einfacher Weise möglich, die Anzahl der in dem Ladeschritt an die Empfängereinrichtung zu übermittelnden Datenpakete auf das unbedingt erforderliche Maß zu reduzieren, sodass es anders als bisher nicht mehr erforderlich ist, die zu ladenden Daten nach einem Verbindungsabbruch in einem - in der Regel unmittelbar - vorangehenden Ladeschritt nochmals komplett von der Sendereinrichtung an die Empfängereinrichtung zu übermitteln. Hierdurch reduziert sich der zeitliche Aufwand für die Ermittlung unter Umständen erheblich.

Es sei hierbei angemerkt, dass das Laden der Daten in den Speicher der Empfängereinrichtung im Sinne der vorliegenden Erfindung nicht notwendigerweise schon das Speichern der Daten an ihrer endgültigen Zieladresse, also in einem Zielspeicherbereich, bezeichnen soll. Vielmehr kann der Speicher neben dem Zielspeicherbereich einen oder mehrere weitere Speicherbereiche (z. B. einen oder mehrere Zwischenspeicherbereiche etc.) umfassen, in welche die Daten zunächst geladen werden, bevor sie dann in den Zielspeicherbereich geschrieben werden.

Die Bestimmung der zu ladenden Datenpakete erfolgt dabei in Abhängigkeit von der Art bzw. Technologie des verwendeten Speichers. Bei den sektorweise organisierten Speichern, die nur abschnittsweise, also sektorweise, zu löschen sind, müssen bei einem Verbindungsabbruch in einem vorherigen Ladeschritt unter Umständen auch Datenpakete gelöscht werden, die bereits erfolgreich in den zuletzt beschriebenen Speichersektor geladen wurden. Diese Datenpakete müssen dann erneut übermittelt werden, um eine Vollständigkeit der Daten sicherzustellen.

Bevorzugt wird in dem Ladeschritt in Abhängigkeit von dem aktuellen Ladezustand des Speichers zumindest ein Sektor des Speichers gelöscht und es werden neben den für den gelöschten Sektor vorgesehenen Datenpaketen ausschließlich diejenigen Datenpakete übermittelt und in den Speicher geladen, welche noch nicht erfolgreich in den Speicher geladen wurden. Hierdurch reduziert sich die zu übertragende und zu ladende Datenmenge in vorteilhafter Weise auf ein Minimum.

Die Erfassung und Aktualisierung des Ladezustands kann zu beliebigen Zeitpunkten erfolgen. So kann beispielsweise vorgesehen sein, dass der Ladezustands nur erfasst und aktualisiert wird, wenn ein Verbindungsabbruch und/oder das vollständige Laden der Daten in den Speicher erfasst wird, wobei dann beispielsweise eine entsprechende Ladezustandsinformation nicht-flüchtig gespeichert wird. Vorzugsweise ist vorgesehen, dass in dem Ladeschritt nach einem erfolgreichen Laden eines Datenpakets in den Speicher eine den aktuellen Ladezustand des Speichers kennzeichnende Ladezustandsinformation nicht-flüchtig gespeichert wird. Die Ladezustandsinformation kann an beliebiger Stelle gespeichert werden, bevorzugt wird sie jedoch in dem Speicher selbst gespeichert.

Das erfolgreiche vollständige Laden der Daten kann auf beliebige Weise dokumentiert werden. Vorzugsweise ist vorgesehen, dass in dem Ladeschritt nach dem erfolgreichen Laden des letzten Datenpakets eine den erfolgreichen Abschluss des Ladeschritts kennzeichnende Ladezustandsinformation gespeichert wird. Hierdurch wird eine schnelle spätere Erfassung des erfolgreichen Abschlusses des Ladeschritts möglich.

Die Erfassung und Beschreibung des aktuellen Ladezustands kann auf beliebige geeignete Weise erfolgen. Bei bevorzugten Varianten des erfindungsgemäßen Verfahrens ist vorgesehen, dass zur Überprüfung des aktuellen Ladezustands eine Ladezustandsinformation abgefragt wird, wobei die Ladezustandsinformation zumindest in Verbindung mit einer weiteren geeigneten Ladeinformation zumindest ein in dem vorhergehenden Ladeschritt erfolgreich in den Speicher geladenes Datenpaket identifiziert. Anhand dieses Datenpakets können dann in einfacher Weise sowohl der zu löschende Sektor des Speichers als auch die noch zu ladenden Datenpakete ermittelt werden.

Die Ladezustandsinformation kann grundsätzlich einen beliebigen geeigneten Aufbau und Inhalt haben. Bevorzugt umfasst die Ladezustandsinformation zumindest eine Speicheradresse eines in dem vorhergehenden Ladeschritt erfolgreich in den Speicher geladenen Datenpakets, da anhand dieser Speicheradresse das betreffende Datenpaket besonders einfach zu identifizieren ist.

Hierbei kann es sich um eine beliebige Speicheradresse innerhalb des Datenpakets handeln. Bevorzugt umfasst die Ladezustandsinformation aber eine Startadresse eines in dem vorhergehenden Ladeschritt erfolgreich in den Speicher geladenen Datenpakets. Weiterhin umfasst die Ladezustandsinformation bevorzugt auch eine Endadresse und/oder eine Größeninformation dieses in dem vorhergehenden Ladeschritt erfolgreich in den Speicher geladenen Datenpakets, sodass dem vorteilhafter Weise einfach ermittelt werden kann, ob noch weitere Speichersektoren zu löschen sind, falls sich das Datenpaket über mehrere Sektoren des Speichers erstreckt.

Bei bevorzugten Varianten der Erfindung ist vorgesehen, dass unterschiedliche Versionen der zu ladenden Daten erkennbar sind. Bevorzugt ist daher vorgesehen, dass in dem Überprüfungsschritt ein Versionsvergleich der Version der aktuell in den Speicher geladenen und der Version der in den Speicher zu ladenden Daten erfolgt und der Ladeschritt nur durchgeführt wird, wenn die Version der in den Speicher zu ladenden Daten aktueller ist als die Version der aktuell in den Speicher geladenen Daten und/oder eine den Ladeschritt auslösende Ladeanweisung vorliegt. Hiermit ist es möglich, ein versehentliches erneutes Laden bereits geladener Daten zu vermeiden.

Um sicherzustellen, dass nur entsprechend vollständige, autorisierte und/oder authentische Daten in den Speicher geladen werden, ist bevorzugt vorgesehen, dass die Sendereinrichtung vor dem Ladeschritt zumindest einem Teil der zu ladenden Daten, insbesondere zumindest einen Teil der Datenpakete, Prüfdaten zuordnet und die Empfängereinrichtung die Vollständigkeit und/oder Integrität und/oder Authentizität der zu ladenden Daten unter Verwendung der Prüfdaten verifiziert. Hierbei können beliebige, hinlänglich bekannte geeignete Sicherungsmechanismen, wie CRCs, MACs (Message Authentication Codes), digitale Signaturen etc., eingesetzt werden. Vorzugsweise werden allen Datenpaketen entsprechende Prüfdaten zugeordnet, sodass eine lückelose Verifizierung möglich ist.

Bei bevorzugten Varianten des erfindungsgemäßen Verfahrens ist vorgesehen, dass zumindest ein Teil der zu ladenden Daten von der Sendereinrichtung an die Empfängereinrichtung in komprimierter Form übermittelt wird, da hierdurch gegebenenfalls eine weitere Zeitoptimierung bei der Übertragung erzielt werden kann.

Bei weiteren vorteilhaften Varianten des erfindungsgemäßen Verfahrens erfolgt die Aufteilung der zu ladenden Daten in Datenpakete in dem Aufteilungsschritt in Abhängigkeit von der Verbindung zwischen der Sendereinrichtung und der Empfängereinrichtung, wobei insbesondere eine Kompression zumindest eines Teils der zu ladenden Daten erfolgen kann. Je nach Art der Verbindung zwischen der Sendereinrichtung und der Empfängereinrichtung und der Rechenkapazität der Empfängereinrichtung kann dabei eine Optimierung hinsichtlich der Übertragungsgeschwindigkeit vorgenommen werden. So kann beispielsweise auf eine Komprimierung verzichtet werden, wenn durch die Dekomprimierung in der Empfängereinrichtung der durch die Kompression erzielte Geschwindigkeitsvorteil bei der Übertragung wieder zumindest weit gehend zunichte gemacht wird.

Nach dem erfindungsgemäßen Verfahren können grundsätzlich beliebige Daten in den Speicher der Empfängereinrichtung geladen werden. Besonders vorteilhaft lässt sich das Verfahren im Zusammenhang mit der Neuinstallierung und/oder Aktualisierung von Daten in der Empfängereinrichtung einsetzen. Hierbei kann es sich beispielsweise um den Austausch von Firmware der Empfängereinrichtung handeln. Bevorzugt ist daher vorgesehen, dass die zu ladenden Daten zumindest einen Teil der Firmware der Empfängereinrichtung darstellen.

Das jeweilige Datenpaket kann dann in dem Ladeschritt zum einen unmittelbar an seine endgültige Position in den Speicher geschrieben werden, sodass kein weiterer Speicher für eine Zwischenspeicherung der Datenpakete vorgesehen sein muss. In diesem Fall ist die Firmware dann in einen Ladeteil, den so genannten Bootloader, und einen Hauptfunktionsteil unterteilt. Der Ladeteil der Firmware ist dann so ausgebildet, dass er dann unter anderem die Kommunikation mit der Sendereinrichtung und das Laden der Datenpakete übernehmen kann, sodass der Hauptfunktionsteil der Firmware ausgetauscht werden kann. Diese Konfiguration ist vor allen Dingen dann von Vorteil, wenn der Speicher nur entsprechend begrenzten Umfang hat, sodass ein Zwischenspeichern der Daten nicht möglich ist. Es versteht sich hierbei, dass der Ladeteil dann einen seinem Funktionsumfang entsprechenden Speicherplatzbedarf aufweist.

Bei einer anderen Variante der Erfindung wird das jeweilige Datenpaket in dem Ladeschritt zunächst in einen Zwischenspeicherbereich des Speichers geschrieben. Dies hat den Vorteil, dass der Hauptfunktionsteil der Firmware dann die Kommunikation mit der Sendereinrichtung und das Zwischenspeichern der Datenpakete übernehmen kann, sodass der Ladeteil der Firmware später nur noch die Organisation der Daten und den Austausch des Hauptfunktionsteils übernehmen muss. Hierdurch wird zwar mehr Speicherplatz benötigt, der Ladeteil kann dann aber entsprechend einfach und damit klein ausfallen.

Weiterhin versteht es sich, dass je nach Arbeitsweise der Empfängereinrichtung auch vorgesehen sein kann, dass die zu ladenden neuen Firmwaredaten auch direkt an einen neuen Speicherplatz geschrieben werden können, ohne die alten Firmwaredaten auszutauschen, sofern dieser neue Speicherplatz ebenfalls als Speicher für Firmware festgelegt, d. h. nutzbar ist.

Bei weiteren bevorzugten Varianten des erfindungsgemäßen Verfahrens ist vorgesehen, dass in dem Ladeschritt vor dem Laden des ersten Datenpakets zumindest der Speichersektor gelöscht wird, in welchen zumindest ein erster Teil des ersten Datenpakets zu laden ist. Vorzugsweise werden beginnend mit diesem Speichersektor auch alle weiteren noch mit den Daten der verbleibenden Datenpakete zu beschreibenden Speichersektoren gelöscht.

Es kann vorgesehen sein, dass die Sendereinrichtung in Abhängigkeit von dem aktuellen Ladezustand des Speichers eine Löschinformation generiert, welche die in dem Ladeschritt zu löschenden Speichersektoren des Speichers unmittelbar identifiziert. Die Sendereinrichtung übermittelt die Löschinformation dann an die Empfängereinrichtung, sodass in dem Ladeschritt in Abhängigkeit von der Löschinformation die entsprechenden Speichersektoren des Speichers gelöscht werden. Dies hat den Vorteil, dass in der Empfängereinrichtung, die in der Regel eine begrenzte Rechenkapazität aufweist, keine Rechenleistung für die Berechnung der zu löschenden Speichersektoren vorgehalten werden muss.

Bei anderen Varianten der Erfindung kann vorgesehen sein, dass die Empfängereinrichtung die zu löschenden Speichersektoren selbst bestimmt. Dies hat den Vorteil, dass die Sendereinrichtung keine Kenntnis über die Art und/oder Zusammensetzung des Speichers haben muss, sodass die Datenhaltung in der Sendereinrichtung vereinfacht bzw. reduziert wird oder keine entsprechende diesbezügliche Kommunikation zwischen der Sendereinrichtung und der Empfängereinrichtung stattfinden muss.

Erfolgt eine Trennung zwischen dem Laden der Datenpakete in die Empfängereinrichtung und dem Speichern in den endgültigen Speicherbereich, also beispielsweise ein Speichern der Datenpakete in einem Zwischenspeicher, so kann vorgesehen sein, dass die Empfängereinrichtung erfasst, dass ein in einem vorherigen Ladeschritt vollständig empfangenes Datenpaket noch nicht erfolgreich an seine endgültige Position geschrieben wurde, sodass dann auch noch der bzw. die Speichersektoren zu löschen sind, die für dieses vollständig empfangene aber noch nicht an seiner endgültigen Position erfolgreich gespeicherte Datenpaket vorgesehen sind.

Die Löschinformation kann beispielsweise im Rahmen der Kommunikation zwischen der Sendereinrichtung und der Empfängereinrichtung in einem entsprechenden Übermittlungs- oder Paketierungskopf (so genannter Header) vor der Übermittlung der eigentlichen Datenpakete übermittelt werden.

Bei bevorzugten Varianten des erfindungsgemäßen Verfahrens ist vorgesehen, dass der aktuelle Ladezustand durch eine Ladezustandsinformation repräsentiert ist, die zumindest in Verbindung mit einer weiteren Ladeinformation zumindest ein in dem vorhergehenden Ladeschritt in den Speicher geladenes erstes Datenpaket identifiziert, welches als letztes erfolgreich in den Speicher geladen wurde und als erstes in einen zuvor gelöschten zuvor gelöschtes ersten Speichersektor geschrieben wurde. Die die Löschinformation identifiziert dann zumindest den ersten Speichersektor.

Auf diese Weise hält die Ladezustandsinformation stets einen Datenblock, der einen kritischen Abschnitt im Falle eines Abbruchs der Übertragung von der Sendereinrichtung zur Empfängereinrichtung markiert. Im Falle eines Abbruchs der Übertragung, kann hierdurch in Abhängigkeit des Ladezustandes zum einen ermittelt werden, welche Datenblöcke zwingend wiederholt übertragen werden müssen. Da wie bereits oben erwähnt beim Speichern der Datenblöcke der Abbruch der Übertragung zu beliebigen, also nicht genau definierten Zuständen im zuletzt beschriebenen Adressraum führen kann, ist es bedingt durch die Speichertechnologie erforderlich, den bzw. die zuletzt beschriebenen Speichersektoren zu löschen. Da die Sektorgrenzen nicht zwingend auf Datenblockgrenzen liegen, gehen unter Umständen durch das Löschen von Speichersektoren mehrere bereits erfolgreich übertragene Datenblöcke ganz oder teilweise verloren.

Da der Ladezustand bei dieser Variante immer einen Datenblock enthält, der als erster einen zuvor gelöschten Sektor beschrieben hat und die Datenblöcke eine definierte Abfolge von Startadressen aufweisen (in der Regel mit streng monoton steigenden Startadressen versehen sind), ist dieser anhand der Ladezustandsinformation identifizierbare Datenblock ein sicherer Kandidat für eine Fortführung der Übertragung. Falls nicht bekannt ist, welche Speichersektoren in einem vorherigen Ladeschritt bereits beschrieben wurden, kann vorgesehen sein, dass Fortführung der Übertragung, also in dem aktuellen Ladeschritt, zumindest alle Speichersektoren zwischen einem Interim-Start-Sektor und einem Interim-End-Sektor gelöscht werden. Der Interim-Start-Sektor ist der Speichersektor, der die Start-Adresse des Datenpakets umfasst, welches anhand der Ladezustandsinformation zu ermitteln ist. Der Interim-End-Sektor enthält die End-Adresse des Datenpakets, das anhand der Ladezustandsinformation zu ermitteln ist. Sollen wie oben beschrieben auch noch alle weiteren noch zu beschreibenden Speichersektoren gelöscht werden, so kann der letzte zu löschende Speichersektor wiederum mit Hilfe einer im Paketierungskopf enthaltenen Endadresse des letzten Datenpakets ermittelt werden.

Es versteht sich hierbei, dass es ausreichen kann, dass die Ladezustandsinformation jeweils das entsprechende letzte erfolgreich geladene Datenpaket identifiziert, also keine Historie der erfolgreich geladenen Datenpakete vorgesehen sein muss. Dies kann insbesondere dann der Fall sein, wenn exakt an den Sektorgrenzen der Speichersektoren wieder aufgesetzt werden kann, sodass dann für den Fall, dass das letzte erfolgreich geladene Datenpaket sich über eine Sektorgrenze erstreckt, nur der nachfolgende Speichersektor gelöscht wird und nur der Teil des Datenpakets, der sich über diesen Speichersektor erstreckt, neu in diesen Speichersektor geschrieben wird.

Ist dies nicht der Fall, ist entweder eine Historie erforderlich, die zumindest dasjenige Datenpaket identifiziert, bei dem zusätzlich auch noch die Startadresse in dem ersten Speichersektor liegt. Alternativ kann auch vorgesehen sein, dass Ladezustandsinformation nur solche Datenpakete identifiziert, bei denen auch die Startadresse des ersten Datenpakets in dem ersten Speichersektor liegt. Hiermit wird dann als ein Datenpaket identifiziert, welches als erstes den betreffenden ersten Speichersektor beschreibt und dessen Startadresse zusätzlich in diesem ersten Speichersektor liegt, sodass bei diesem Datenpaket in jedem Fall ohne die oben genannten Probleme die Übertragung wieder aufgesetzt werden kann.

Die vorliegende Erfindung betrifft weiterhin eine Anordnung zum Laden von Daten von einer Sendereinrichtung in einen nicht-flüchtigen, nur abschnittsweise löschbaren Speicher einer mit der Sendereinrichtung verbindbaren Empfängereinrichtung, wobei die Sendereinrichtung zum Aufteilen der zu ladenden Daten in eine Mehrzahl von Datenpaketen ausgebildet ist und die Empfängereinrichtung zum Empfang und zum Laden zumindest eines Teils der Datenpakete in einem Ladeschritt in den Speicher ausgebildet ist. Erfindungsgemäß ist vorgesehen, dass die Empfängereinrichtung zur Übermittlung eines aktuellen Ladezustands des Speichers an die Sendereinrichtung ausgebildet ist, wobei der aktuelle Ladezustand wiedergibt, ob bereits zumindest ein Teil der Datenpakete in einem vorhergehenden Ladeschritt erfolgreich in den Speicher geladen wurde. Weiterhin ist die Sendereinrichtung zur Ermittlung der an die Empfängereinrichtung zu übermittelnden und/oder in dem Ladeschritt in den Speicher zu ladenden Datenpakete in Abhängigkeit von dem aktuellen Ladezustand ausgebildet.

Diese Anordnung eignet sich zur Durchführung des erfindungsgemäßen Verfahrens. Mit ihr lassen sich die oben beschriebenen Varianten und Vorteile in demselben Maße realisieren, sodass zur Vermeidung von Wiederholungen lediglich auf die obigen Ausführungen Bezug genommen wird.

Die vorliegende Erfindung eignet sich grundsätzlich für die Verwendung im Zusammenhang mit beliebigen Datenverarbeitungseinrichtungen, bei denen eine entsprechende Speichertechnologie zur Anwendung kommt. Insbesondere eignet sie sich natürlich für die Anwendung in Verbindung mit den eingangs bereits erwähnten eingebetteten Systemen besonders vorteilhaft lässt sich in Verbindung mit Frankiermaschinen-Systemen einsetzen, da hier in der Regel auf Seiten der Frankiermaschine zum einen nur begrenzte Rechenkapazität vorhanden ist und zum anderen die Verbindung mit einer entfernten Datenzentrale, welche entsprechend aktualisierte Daten zur Verfügung stellen kann, in der Regel über vergleichsweise langsame und damit anfällige Kommunikationskanäle (Verbindungen über Modem etc.) erfolgt. Bevorzugt ist daher vorgesehen, dass die Empfängereinrichtung eine Frankiermaschine ist und/oder die Sendereinrichtung eine entfernte Datenzentrale ist.

Die vorliegende Erfindung betrifft weiterhin Datenverarbeitungseinrichtung, welche sämtliche Merkmale einer Sendereinrichtung oder einer Empfängereinrichtung einer erfindungsgemäßen Anordnung aufweist.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen:
- Figur 1: eine schematische Darstellung einer bevorzugten Ausführungsform der erfindungsgemäßen Anordnung zum Laden von Daten von einer Sendereinrichtung in eine Empfängereinrichtung, mit welcher eine bevorzugte Variante des erfindungsgemäßen Verfahrens zum Laden von Daten von einer Sendereinrichtung in eine Empfängereinrichtung durchgeführt werden kann;
- Figur 2: eine schematische Darstellung der zur Übermittlung an die Empfängereinrichtung aus Figur 1 aufbereiteten Daten;
- Figur 3: eine schematische Darstellung eines Teils des Speichers der Empfängereinrichtung aus Figur 1;
- Figur 4A: einen ersten Teil eines Ablaufdiagramms einer bevorzugten Variante des erfindungsgemäßen Verfahrens zum Laden von Daten von einer Sendereinrichtung in eine Empfängereinrichtung, welche mit der Anordnung aus Figur 1 durchgeführt werden kann;
- Figur 4B: einen zweiten Teil eines Ablaufdiagramms einer bevorzugten Variante des erfindungsgemäßen Verfahrens zum Laden von Daten von einer Sendereinrichtung in eine Empfängereinrichtung, welche mit der Anordnung aus Figur 1 durchgeführt werden kann.

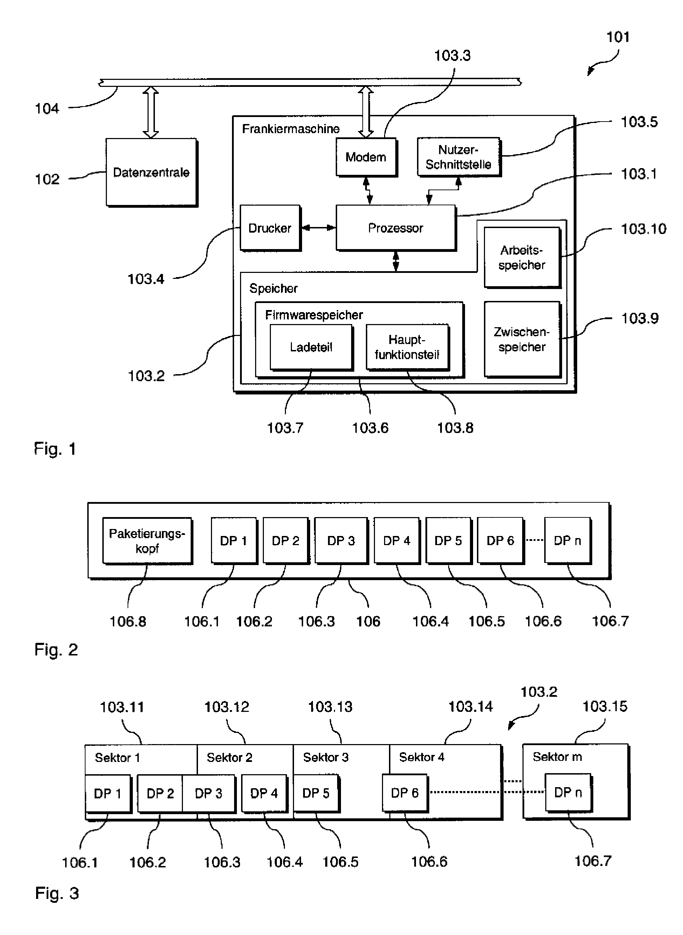

Im Folgenden wird unter Bezugnahme auf die Figuren 1 bis 4B in eine bevorzugte Ausführungsform der erfindungsgemäßen Anordnung 101 zum Laden von Daten von einer Sendereinrichtung in Form einer Datenzentrale 102 in eine Empfängereinrichtung in Form einer Frankiermaschine 103 beschrieben, mit welcher eine bevorzugte Variante des erfindungsgemäßen Verfahrens zum Laden von Daten durchgeführt wird. Die Frankiermaschine 103 kann über ein Kommunikationsnetz 104 mit der entfernten Datenzentrale 102 verbunden werden.

Die Frankiermaschine 103 umfasst einen Prozessor 103.1 in Form eines Mikroprozessors und einen damit verbundenen Speicher 103.2. Über ein mit dem Prozessor 103.1 verbundenes Modem 103.3 kann die Frankiermaschine 103 mit dem Kommunikationsnetz 104 und damit der Datenzentrale 102 verbunden werden. Weiterhin umfasst die Frankiermaschine 103 eine Druckeinrichtung 103.4, mittels derer Frankierabdrucke generiert werden können, sowie eine Benutzerschnittstelle 103.5 (z. B. Display und Tastatur), über die ein Benutzer unter anderem bestimmte Eingaben in die Frankiermaschine 103 vornehmen kann.

Die Frankiermaschine ist ein so genanntes eingebettetes System, das neben spezieller Peripherie (Display und Tastatur 103.5, Drucker 103.4, Pieper, Motoren, Sensoren, Sicherheitsmodul, Modem 103.3, Schnittstellen etc.) aus den Grundkomponenten Prozessor 103.1 und Speicher 103.2 zusammengesetzt ist. Der Speicher 103.1 ist dabei logisch in einen Programmspeicher, einen persistenten (nicht-flüchtigen) Speicher zur kontinuierlichen Datenhaltung und einen transienten (flüchtigen) Arbeitsspeicher unterteilt. Der Programmspeicher enthält Anweisungen, die vom Prozessor 103.1 abgearbeitet werden und letztendlich im Zusammenspiel mit der angeschlossenen Peripherie die Funktionalität der Frankiermaschine 103 umsetzen. Der persistente Speicher hält Daten, die von der Frankiermaschine 103 zur Umsetzung der Funktionalität über alle Zeit - also auch nach einem Ausschaltvorgang der Frankiermaschine 103 - benötigt werden. Der Arbeitsspeicher wird für die Arbeiten (in der Regel Berechnungen) des Prozessors 103.1 benötigt und dient zur Speicherung von Ergebnissen, die jedoch nur für den jeweils aktuellen Betrieb und insbesondere nicht persistent notwendig sind.

Wie es für eine Reihe derartiger eingebetteter Systeme typisch ist, ist der Teil des Speichers 103.2, der zum Speichern und schnellen Lesen von großen Datenmengen dient, ein sektorweise organisierter integrierter Schaltkreis (IC), der zufällig, wahlfrei beschrieben (programmiert) aber nur sektorweise gelöscht werden kann. Im vorliegenden Beispiel basiert dieser Teil des Speichers 103.2 auf der so genannten FLASH-Technologie. Es versteht sich jedoch, dass bei anderen Varianten der Erfindung auch beliebige andere, sektorweise organisierte Speichertypen zum Einsatz kommen können.

Es besteht bei den Herstellern und den Nutzern von Frankiermaschinen gleichermaßen ein wachsendes Interesse für die kontinuierliche Verbesserung und Erweiterung der Frankiermaschinen. Dabei wird insbesondere angestrebt diese Maßnahmen bereits während der Lebenszeit der Frankiermaschine wirken zu lassen. Hierfür werden immer häufiger Serviceverträge und Sondervereinbarungen zwischen den Nutzern und dem Vertrieb bzw. dem Hersteller der Frankiermaschine abgeschlossen.

In der Regel werden solche Verbesserungen und Erweiterungen durch Software realisiert, da hier große Effekte bei minimalem Aufwand-Nutzen-Verhältnis realisiert werden können. Die Software in einem eingebetteten System, wie es in der Frankiermaschine 103 verwendet wird, wird im folgenden als Firmware bezeichnet. Bei der Firmware muss es sich aber nicht zwingend um ausführbare Software handeln, wie man sie von herkömmlichen PCs kennt. Es kann sich auch um komplexe Daten oder Informationen handeln, die letztendlich jedoch innerhalb des eingebetteten Systems verarbeitet werden. Nicht zuletzt kann eine Firmware auch aus beliebigen Kombinationen solcher Daten bestehen.

Der Speicher 103.2 umfasst unter anderem einen als Programmspeicher bzw. Firmwarespeicher designierten ersten Speicherbereich 103.6, der wiederum in einen zweiten Speicherbereich 103.7 und einen dritten Speicherbereich 103.8 unterteilt ist, und einen als Zwischenspeicher designierten vierten Speicherbereich 103.9. Der zweite Speicherbereich 103.7 ist dafür vorgesehen, einen Ladeteil - den so genannten Bootloader - der Firmware der Frankiermaschine 103 aufzunehmen. Der dritte Speicherbereich 103.8 dient dazu, einen Hauptfunktionsteil der Firmware der Frankiermaschine 103 aufzunehmen. Die Funktionen des Ladeteils 103.7 und des Hauptfunktionsteils 103.8 werden im Folgenden noch näher beschrieben.

Eine übliche Variante der Herstellung von Leiterplatten für eingebettete Systeme basiert auf einem Bestückungs-Verfahren, bei dem die Bauteile auf die Oberfläche einer Leiterplatte aufgelötet werden. Ein Austausch von Firmware eines solchen eingebetteten Systems durch einen physikalischen Eingriff in das System (z. B. durch den Austausch von Bauteilen) ist oft aus Kostengründen, immer häufiger aber auch aus Prozessgründen nicht mehr rentabel für den Hersteller und den Kunden. Gleichzeitig sinken die Kosten für Speicher-Bauteile stetig und die Verfahren zur Umsetzung komplexer Anwendungen auf eingebetteten Systemen werden effizienter, sodass es ohne hohe Kosten technisch möglich ist, Firmware ohne physikalische Eingriffe über das erfindungsgemäße Verfahren auszutauschen, wie dies hier am Beispiel der Frankiermaschine 103 beschrieben werden soll.

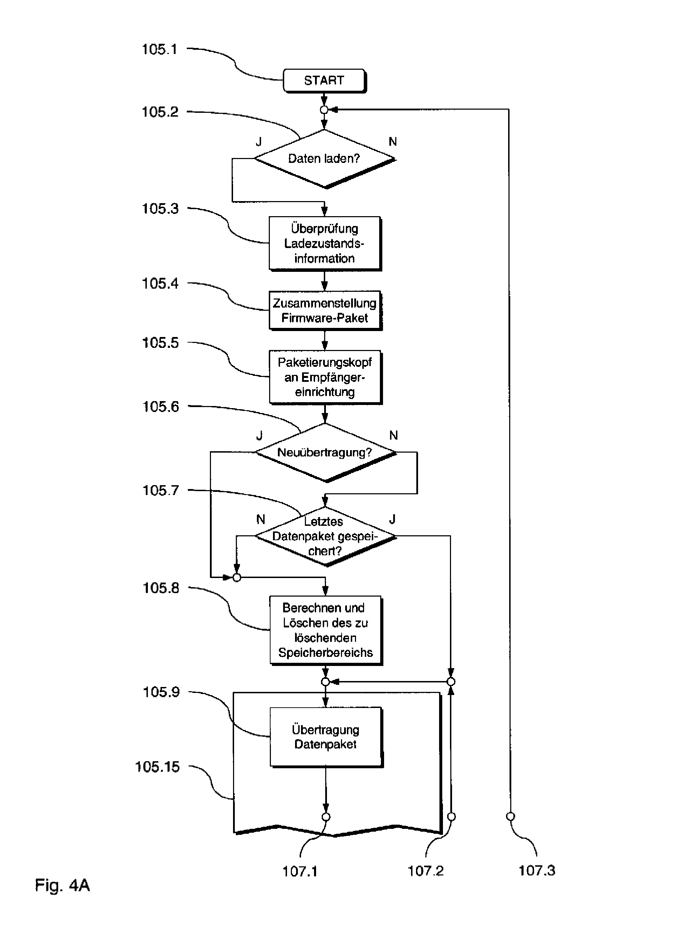

Wie Figur 4A zu entnehmen ist, wird der Verfahrensablauf zunächst in einem Schritt 105.1 gestartet. In einem Schritt 105.2 wird dann überprüft, ob entsprechende Daten - im vorliegenden Beispiel also Firmware - von der Datenzentrale 102 in die Frankiermaschine 103 geladen werden sollen. Diese Überprüfung kann beispielsweise im Rahmen einer routinemäßigen Kommunikation zwischen der Frankiermaschine 103 und der Datenzentrale 102 stattfinden.

Das Laden der Daten kann dabei sowohl von der Datenzentrale 102 als auch von der Frankiermaschine 103 ausgelöst werden. So ist es beispielsweise möglich, dass im Falle einer Aktualisierung der Firmware, die für die betreffende Frankiermaschine 103 vorgesehen ist, die Datenzentrale 102 den Austausch der Firmware der Frankiermaschine 103 automatisch, d. h. ohne weiteres Zutun des Nutzers der Frankiermaschine 103, beim nächsten Kontakt der Frankiermaschine 103 mit der Datenzentrale 102 initiiert. Ebenso kann natürlich auch, beispielsweise auf eine entsprechende Eingabe des Nutzers der Frankiermaschine 103 hin, eine entsprechende Kommunikation mit der Datenzentrale 102 ausgelöst werden, im Rahmen derer ein Austausch der Firmware seitens der Frankiermaschine 103 angefordert wird.

Im vorliegenden Beispiel soll der Austausch, also das Laden der Firmware von der Datenzentrale 102 in die Frankiermaschine 103, über das Modem 103.3 erfolgen. Hierbei ist aufgrund des vergleichsweise störungsanfälligen Übertragungskanals und der bei großen Datenmengen häufig langen Übertragungszeit in besonderem Maße mit Verbindungsabbrüchen, insbesondere auch durch externen - willentlichen oder unbeabsichtigten - Eingriff des Benutzers der Frankiermaschine 103 zu rechnen. Den mit einem solchen Verbindungsabbruch verbundenen Nachteilen wird, wie im Folgenden noch näher erläutert wird, durch die vorliegende Erfindung entgegengewirkt.

Es versteht sich jedoch, dass die Frankiermaschine 103 den Austausch von Firmware grundsätzlich auch über entsprechende andere Schnittstellen ermöglicht. So kann beispielsweise vorgesehen sein, dass die Firmware von dem mit der Frankiermaschine 103 über eine entsprechende Schnittstelle verbundenen PC eines Servicetechnikers in die Frankiermaschine 103 geladen wird.

Die Frankiermaschine 103 ermöglicht dem Benutzer im vorliegenden Beispiel aber auch den Austausch ihrer Firmware ohne den Eingriff eines Servicetechnikers und den damit verbundenen Aufwand. So wird im vorliegenden Beispiel über ein speziell für diesen Zweck vorbereitetes Menü oder einen so genannten Softkey durch eine Eingabe bzw. eine Betätigung des Benutzers ein Dienst gestartet, im Zuge dessen die Kommunikation mit der Datenzentrale 102 aufgebaut und dann die Firmware ausgetauscht wird.

Damit die Firmware der Frankiermaschine 103 ausgetauscht werden kann, wird sie zunächst geeignet logisch gruppiert und der Einfachheit halber in der Regel auch so im Speicher 103.2 abgelegt. Dies ist jedoch nicht zwingend notwendig. So haben die Portotabellen und die Druckbildbeschreibung einen vordefinierten Bereich im persistenten Speicher. Eine präzisere Gruppierung z. B. der Druckbildbeschreibung ist sinnvoll, wird jedoch in diesem Ausführungsbeispiel nicht aufgezeigt.

Der Programmspeicher 103.6 wurde ebenfalls logisch gruppiert, nämlich in den Speicherbereich 103.7 für den Ladeteil bzw. Ladeanweisungsteil der Firmware und den Speicherbereich 103.8 für den Hauptfunktionsteil der Firmware. Es versteht sich jedoch, dass bei anderen Varianten der Erfindung auch eine beliebige andere Aufteilung in mehr als nur zwei Funktionsteile möglich ist.

Der Ladeanweisungsteil umfasst im vorliegenden Beispiel Anweisungen zur Kommunikation über die Schnittstellen der Frankiermaschine 103 zum Empfangen von Firmware, Anweisungen zum Programmieren bzw. umorganisieren des Speichers 103.2, Anweisungen zum Verifizieren empfangener Daten (beispielsweise eines auszutauschenden Hauptfunktionsteils) und Anweisungen zum Starten des Hauptfunktionsteils.

Der Hauptfunktionsteil der Firmware beinhaltet alle übrigen Anweisungen und konstanten Daten für den Prozessor 103.1, die notwendig sind, die für die Frankiermaschine 103 geplante Funktionalität umzusetzen (z. B. Menüsteuerung, Brief-Erkennung und -Transport, Frankierung, Abrechnung etc.).

Im vorliegenden Beispiel ist der Ladeanweisungsteil so gruppiert, dass er möglichst klein in seiner Größe ist, aber in seinem Funktionsumfang mächtig genug ist, um den Hauptfunktionsteil austauschen zu können.

Aus dieser Gruppierung der Firmware ergibt sich jedoch noch keine Unterteilung, die zeitoptimiert übertragen werden kann, da die entstehenden Anweisungen in der Regel stark redundant sind und oft Anweisungen und Konstanten so platziert sind, dass sie durch Lücken getrennt sind.

Zum Austausch der Firmware wird daher in der Datenzentrale 102, mithin also außerhalb der Frankiermaschine 103, zunächst in einem Aufteilungsschritt eine spezielle Firmware-Paketierung vorgenommen. Dabei wird die Firmware in n Datenblöcke bzw. Datenpakete 106.1 bis 106.2 (siehe Figur 2) aufgeteilt, die jeweils komplett in den Arbeitsspeicher 103.10 der Frankiermaschine 103 geladen werden können.

Da im vorliegenden Beispiel durch die Gruppierung der Firmware auch die physikalische Position der Firmware (Segmentierung) festgelegt ist, wird jedem Datenblock 106.1 bis 106.7 seine Ziel-Adresse und Größe vorangestellt. Alternativ könnten auch Ziel- und End-Adresse angegeben werden. Der Datenblock 106.1 bis 106.7 kann optional zur Verbesserung der Übertragungssicherheit zusätzliche Prüfdaten (z. B. CRC) umfassen. Der Datenblock kann ebenfalls optional komprimiert werden, falls dies bei der zu erwartenden Übertragungsgeschwindigkeit zwischen der Datenzentrale 102 und der Frankiermaschine 103 zu einer Erhöhung des Durchsatzes führt.

Bei dem Paketierungs-Prozess wird ein Optimum für den Datendurchsatz angestrebt. Dabei müssen die Komprimierungsrate, die Größe des zur Verfügung stehenden Arbeitsspeichers 103.10 der Frankiermaschine 103 und die Segmentierung der Firmware berücksichtigt werden.

Als letzter Prozess-Schritt der Paketierung wird ein Paketierungskopf 106.8 generiert, der die Start- und End-Adresse der Firmware, ihre Größe und sonstige Daten zur Beschreibung und Sicherung der Firmware enthält.

Um die Sicherheit für den Hersteller, den Kunden - und im vorliegenden Beispiel einer Frankiermaschine auch für den Postbeförderer - gewährleisten zu können, wird die Firmware bevorzugt nur autorisiert und gesichert ausgetauscht. Dies wird dadurch realisiert, dass jedes Firmware-Paket 106, welches den Paketierungskopf 106.8 und eine Sequenz von Datenpaketen 106.1 bis 106.7 umfasst, im Paketierungskopf 106.8 ebenfalls Prüfdaten, z. B. einen Message Authentication Code (MAC), eine digitale Signatur oder dergleichen, und Kennungsdaten (z. B. die Versionsnummer der Firmware) enthält.

Die Auswertung dieser Daten ermöglicht es, die Firmware selektiv auszutauschen, wobei die Frankiermaschine durch die Verifizierung von Prüfdaten, beispielsweise durch Verifizieren einer digitalen Signatur, sicherstellen kann, dass nur mit einer gütigen Signatur versehene und damit autorisierte Firmware geladen wird.

Über Kennungsdaten in Form einer Versionsinformation können verschiedene Versionen einer ladbaren Firmware von einem Server der Datenzentrale 102 als Dateien in einem Dateisystem oder einer Datenbank auf Abruf bereitgehalten und bei Bedarf verteilt werden.

Zunächst übermittelt die Frankiermaschine 103 nach dem Verbindungsaufbau einen Dienst-Indikator, der den entsprechenden Dienst zum Firmware-Austausch auf dem Server der Datenzentrale 102 startet und anschließend dem Server die Kontrolle über den fortlaufenden Dienst zum Firmware-Austausch übernehmen lässt.

Der Server liest in einem Schritt 105.3 aus der Frankiermaschine 103 zunächst verschiedenste Statusinformationen aus, die für den Firmware-Austausch notwendig sind. Hierbei handelt es sich z. B. um die derzeitigen Kennungsdaten der aktuell in der Frankiermaschine 103 geladenen Firmware, den letzten Ladestatus bzw. Ladezustand in Form einer Ladezustandsinformation und eine Identifikation, welche die Frankiermaschine 103 bzw. den ihr zugeordneten Benutzer identifiziert. Abhängig von der im Server der Datenzentrale 102 umgesetzten Strategie bzw. Methode, können weitere Daten aus der Frankiermaschine 103 ausgelesen werden die dann dazu führen, dass eine geeignete neue Firmware vom Server der Datenzentrale 102 zum Austausch ausgewählt wird.

In einem Überprüfungsschritt des Schrittes 105.3 überprüft der Server der Datenzentrale 102 anhand der Ladezustandsinformation den aktuellen Ladezustand der Frankiermaschine 103. Anhand der im Folgenden hinsichtlich ihres Inhalts noch detaillierter beschriebenen Ladezustandsinformation kann der Server dabei feststellen, ob - beispielsweise im Zuge einer abgebrochenen, d. h. nicht erfolgreich abgeschlossenen Kommunikation zwischen der Datenzentrale 102 und der Frankiermaschine 103 - bereits ein Teil der im Rahmen des aktuellen Dienstes zu ladenden Datenpakete 106.1 bis 106.7 erfolgreich Speicher 103.2 geladen wurde. Zu diesem Zweck umfasst die Ladezustandsinformation die Startadresse des Datenpakets, das zuletzt erfolgreich an die Frankiermaschine 103 übermittelt wurde.

Ist dies der Fall, wird in einem Schritt 105.4 das betreffende Firmware-Paket 106 um eine geeignete Anzahl von Datenpaketen 106.1 bis 106.7 gekürzt, indem diejenigen Datenpakete entnommen werden, die bereits erfolgreich übermittelt und gespeichert werden konnten. Diese Datenpakete haben im vorliegenden Beispiel alle eine Startadresse, die in einer vorgegebenen Beziehung zu der in der Ladezustandsinformation enthaltenen Startadresse des zuletzt erfolgreich übermittelten Datenpakets stehen.

Je nach der Organisation der Startadressen der Datenpakete 106.1 bis 106.7 kann diese Beziehung beliebig vorgegeben sein. Im vorliegenden Beispiel haben die aus dem Firmware-Paket 106 entnommenen Datenpakete alle eine Startadresse, die kleiner der in der Ladezustandsinformation enthaltenen Startadresse des zuletzt erfolgreich übermittelten Datenpakets sind.

Die nicht mehr zu übermittelnden Datenpakete werden aus der Sequenz der Datenpakete 106.1 bis 106.7 entnommen. Anschließend wird der Paketierungskopf 106.8 des Firmware-Pakets 106 um eine Information erweitert, die eine Fortsetzung eines vorangegangenen Übertragungsvorgangs kennzeichnet.

Anschließend wird die als Firmware-Paket 106 verbleibende Datensequenz, wie im Folgenden noch näher beschrieben wird, an die Frankiermaschine 103 übermittelt, wobei jede Nachricht von der Frankiermaschine 103 positiv durch eine Rücknachricht bestätigt werden muss, damit die Übertragung fortlaufend erfolgreich abgearbeitet werden kann.

Falls der zuletzt ausgeführte Austausch nicht abgebrochen wurde, so ist dies ebenfalls aus der Ladezustandsinformation zu entnehmen. In diesem Fall wird der Paketierungskopf 106 103 des Firmware-Pakets 106 um eine Information erweitert, die eine Neuübertragung kennzeichnet. Das Firmware-Paket 106 mit der Sequenz der Datenpakete 106.1 bis 106.7 wird dann ungekürzt übertragen.

Offensichtlich kann auf diese Weise bei Verbindungsabbrüchen während des Ladens der Firmware in die Frankiermaschine 103 eine kürzere Übertragungszeit erzielt werden, als bei den bisher genutzten Verfahren, bei denen in solchen Fällen grundsätzlich die gesamte Firmware erneut übertragen wurde.

Wichtig für die Vollständigkeit der geladenen Firmware und somit auch für die erfolgreiche Verifikation der Firmware durch die Frankiermaschine 103 ist eine geeignete Auswahl der in der Ladezustandsinformation enthaltenen Startadresse sowie die optimale Verwaltung der beschriebenen Sektoren des nicht-flüchtigen Teils des Speichers 103.2.

Vereinfachend wird im vorliegenden Beispiel angenommen, dass die Datenpakete 106.1 bis 106.7 des Firmware-Pakets 106 so angeordnet sind, dass die Adressen der Daten streng monoton steigend sind. Dies erleichtert die Datenhaltung des Ladezustands bzw. der Ladezustandsinformation und bringt keine erheblichen Nachteile. Es versteht sich jedoch, das bei anderen Varianten der Erfindung auch eine beliebige andere, vorgegebene Abfolge der Adressen der Daten des Firmware-Pakets bestehen kann.

Eine besonders vorteilhafte Variante der Bestimmung der Startadresse der Ladezustandsinformation wird im Folgenden unter Bezugnahme auf Figur 3 erläutert. Figur 3 zeigt exemplarisch den Aufbau eines in unterschiedlich große Speichersektoren 103.11 bis 103.15 gegliederten persistenten Speichers 103.2. Figur 3 zeigt weiterhin, wie die Datenblöcke 106.1 bis 106.7 der Firmware platziert sind.

Wie Figur 3 zu entnehmen ist, liegt wegen der zur zeitoptimierten Übertragung der Firmware vorgenommenen Gruppierung in verschiedene Datenblöcke z. B. eine große Lücke zwischen dem Datenpaket 106.5 (DP 5) und dem Datenpaket 106.6 (DP 6) vor. Eine Übertragung von Daten dieser Lücke ist nicht sinnvoll, da die Daten offensichtlich niemals zu Anwendung kämen. Das Datenpaket 106.2 (DP 2) und das Datenpaket 106.3 (DP 3) liegen dicht aneinander. Da zwischen ihnen keine Lücke zu erkennen ist, könnten sie grundsätzlich zu einem Datenpaket zusammengefasst werden. In diesem Beispiel soll jedoch der resultierende Datenblock (DP 2 + DP 3) größer als der zur Verfügung stehende Arbeitsspeicher 103.10 sein. Da ein Datenpaket jedoch zunächst vollständig empfangen werden muss, stellt dies ein unlösbares Problem mangels Arbeitsspeichers dar. Aus diesem Grund ist während des Paketierungsprozesses die Größe des Arbeitsspeichers 103.10 zu berücksichtigen und DP 2 und DP 3 werden als separate Datenblöcke übertragen.

Die oben bereits beschriebene Ladezustandsinformation umfasst wie erwähnt eine Startadresse, welche die Adresse eines der Datenpakete 106.1 bis 106.7 kennzeichnet. Dieses Datenpaket kann entweder der von der Frankiermaschine 103 gewünschte Beginn der Fortsetzung einer zuvor abgebrochenen und damit unvollständigen Übertragung von Datenpaketen oder das letzte erfolgreich gespeicherte Datenpaket sein, nach dem wieder aufgesetzt werden soll, falls es sich bei der Startadresse der Ladezustandsinformation nicht um eine dem Server bekannte spezielle Ende-Kennung handelt, welche einen erfolgreich abgeschlossenen vorherigen Lagevorgang kennzeichnet.

Der Server nutzt diese Startadresse der Ladezustandsinformation und stellt mit ihr das Firmware-Paket 106, also den Paketierungskopf 106.8 samt der Sequenz von Datenblöcken 106.1 bis 106.7 in der oben beschriebenen Weise zusammen. Beim Zusammenstellen des Firmware-Pakets 106 wird ein so genannter Transfer-Code im Paketierungskopf 106 gesetzt, der eine Neuübertragung oder eine Fortsetzung einer abgebrochenen Übertragung kennzeichnet. Dieser Transfer-Code stellt, wie im Folgenden noch näher erläutert wird, eine Löschinformation war, welche die im Laufe des weiteren Ladevorganges zu löschenden Speichersegmente des Speichers 103.2 identifiziert.

Zunächst wird nun in einem Schritt 105.5 der Paketierungskopf 106.8 vom Server der Datenzentrale 102 zur Frankiermaschine 103 übertragen. Die Frankiermaschine 103 analysiert den Paketierungskopf 106.8. Handelt es sich bei den dem Paketierungskopf 106.8 enthaltenen Kennungsdaten der Firmware um aktuell die in der Frankiermaschine 103 geladenen Firmware oder einen korrekten Nachfolger derselben und ist der Bereich, der durch die im Paketierungskopf 106.8 enthaltene Startadresse und Endadresse der Firmware definiert wird, ein gültiger Bereich für eine Firmware, so wird unter anderem in einem Schritt 105.6 der Transfer-Code ausgewertet.

Falls der Transfer-Code eine Neuübertragung kennzeichnet, so werden in einem Schritt 105.8 die Speichersektoren 103.11 bis 103.15 gelöscht, welche den Bereich umfassen, der durch die Startadresse und Endadresse der Firmware definiert ist.

Falls der Transfer-Code eine fortsetzende Übertragung kennzeichnet, wird in einem Schritt 105.7 überprüft, ob das durch die Ladezustandsinformation gekennzeichnete Datenpaket erfolgreich gespeichert wurde. Ist dies nicht der Fall, werden in dem Schritt 105.8 nicht die Sektoren von der im Paketierungskopf enthaltenden Startadresse bis zur Endadresse der Firmware gelöscht, sondern von einem Interim-Start-Sektor bis zu einem Interim-End-Sektor, die in dem Schritt 105.8 zunächst durch die Frankiermaschine 103 berechnet werden. Der Interim-Start-Sektor ist der Speichersektor, der die Endadresse des zuletzt geschriebenen Datenpakets, also die Endeadresse aus der Ladezustandsinformation enthält. Der Interim-End-Sektor ist der Sektor, der die Endadresse der Firmware enthält. Diese Adressen hat sich die Frankiermaschine bei der letzten Übertragung, wie im Folgenden noch näher erläutert wird, persistent gespeichert.

Nachdem gegebenenfalls die entsprechenden Sektoren in dem Schritt 105.8 gelöscht wurden, wird als nächstes die Abarbeitung des Paketierungskopfes 106.8 dem Server bestätigt. Nachdem der Server der Datenzentrale 102 die Bestätigung erhalten hat, sendet er, wie im Folgenden noch erläutert wird, die Sequenz der Datenpakete 106.1 bis 106.7 und wartet nach jedem Datenpaket auf eine Bestätigung, die einen erfolgreiche Abarbeitung signalisiert.

In einem Schritt 105.9 wird ein erstes Datenpaket der Sequenz von dem Server der Datenzentrale 102 an die Frankiermaschine 103 übermittelt. Die Sequenz beginnt bei einer Neuübertragung mit dem ersten Datenpaket 106.1 und im Falle einer Fortsetzung einer abgebrochenen Übertragung mit dem Datenpaket, dessen Startadresse der Adresse entspricht, die der Server der Ladezustandsinformation entnommen hat.

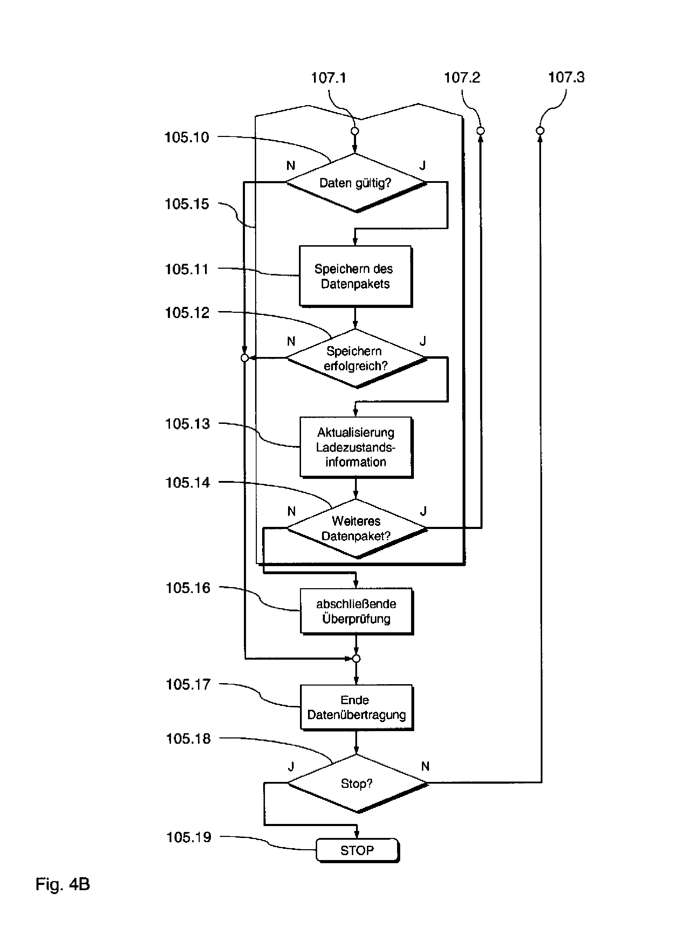

Wie der Figur 4B (die Punkte 107.1 bis 107.3 stellen dabei die Anknüpfungspunkte zwischen den Figuren 4A und 4B dar) zu entnehmen ist, unternimmt die Frankiermaschine 103 zunächst in einem Schritt 105.10 eine Analyse des empfangenen Datenpakets auf seine Gültigkeit. Dabei wird unter anderem geprüft, ob die Startadresse in einem für Firmware reservierten bzw. segmentierten Bereich liegt. Dies ist erforderlich, da andernfalls Bereiche anderer bereits vorhandener Firmware-Teile überschrieben oder gelöscht werden könnten. Zur weiteren Analyse gehört gegebenenfalls das Dekomprimieren, sofern die Daten vom Server als komprimiert gekennzeichnet sind. Ferner wird der CRC des Datenblocks geprüft und ein über die gesamte Firmware gebildeter CRC und HASH aktualisiert. Der CRC und der HASH über die gesamte Firmware werden gebildet, wobei alle Daten von der Startadresse bis zur Endadresse im Paketierungskopf 106.8 aus den Datenpaketen aber auch aus den entstehenden Lücken eingehen.

Die Lückenberechnung ist abhängig von der zum Einsatz kommenden Speicher-Technologie und dem Ergebnis nach einem Löschvorgang. Kommt z. B. wie im vorliegenden Beispiel ein FLASH-Speicher als persistenter Speicher zum Einsatz, so ist dieser nach einem Löschvorgang mit 0xFF gefüllt. In diesem Fall wird für jede Adresse einer Lücke ein 0xFF eingesetzt.

Als letzter Schritt der Analyse in dem Schritt 105.10 wird die Position des Datenpakets bestimmt. Ist die Analyse erfolgreich abgeschlossen, so wird das Datenpaket in einem Schritt 105.11 an eine geeignete Position gespeichert. Andernfalls wird die Datenübertragung abgebrochen.

Wie bereits oben beschrieben, kann die Speicherposition des Datenpakets bereits die im Datenpaket enthaltene Startadresse aber auch eine Folgeadresse im Zwischenspeicher 103.9 sein. Falls das Datenpaket sofort an seine Startadresse gespeichert wird, so erfolgt dies grundsätzlich unkomprimiert, da nur so eine Ausführung durch den Prozessor 105.1 gewährleistet ist.

Falls das Datenpaket wie in dem vorliegenden Beispiel zunächst im Zwischenspeicher 103.9 gespeichert wird, erfolgt dies vorzugsweise komprimiert, um den Zwischenspeicher 103.9 so klein wie möglich halten zu können.

In einem Schritt 105.12 wird dann überprüft, ob das Speichern des Datenpakets erfolgreich war. Nach dem erfolgreichen Speichern des Datenpakets wird in einem Schritt 105.13 die Ladezustandsinformation fortgeschrieben. Andernfalls wird die Datenübertragung abgebrochen.

Der Ladezustand besteht, wie oben erwähnt, in Abhängigkeit von der Ausprägung der Umsetzung z. B. aus einer Startadresse und einer Endadresse. Diese Adressen werden zu Beginn einer Neuübertragung auf eine vorgegebene erste Kennzeichung gesetzt. Falls sie nicht diese erste Kennzeichnung enthalten, so markieren sie im vorliegenden Beispiel ein Datenpaket, das bereits erfolgreich gespeichert wurde und als erstes einen zuvor gelöschten Sektor beschrieben hat.

Im Beispiel aus Figur 3 könnten zunächst die Adressen des Datenpakets 106.1 (DP 1) gespeichert werden, da das Datenpaket 106.1 (DP 1) das erste Datenpaket ist, das den ersten Speichersektor 103.11 beschreibt. Die Adressen des Datenpakets 106.2 (DP 2) werden niemals gespeichert, da das Datenpaket 106.2 (DP 2) niemals als erstes Datenpaket einen zuvor gelöschten Speichersektor beschreibt. Die Adressen des Datenpakets 106.3 (DP 3) könnten anschließend gespeichert werden, da das Datenpaket (DP 3) das erste Datenpaket ist, das den zweiten Speichersektor 103.12 beschreibt. Das Datenpaket 106.5 (DP 5) ist das erste Datenpaket, welches den dritten Speichersektor 103.13 beschreibt und das Datenpaket 106.6 (DP 6) ist das erste Datenpaket, welches den vierten Speichersektor 103.14 beschreibt.

Falls die Startadresse oder Endadresse eines gespeicherten Datenpakets in einem Speichersektor liegen, der während der bisherigen Übertragung noch nicht beschrieben wurde, so werden die Startadresse und die Endadresse in der Ladezustandsinformation gespeichert. Die Endadresse eines Datenpakets lässt sich entweder aus der Startadresse und der Größe des Datenpakets ermitteln oder gegebenenfalls direkt aus den Datenpaket auslesen.

Die Ermittlung, ob ein Speichersektor bereits beschrieben wurde, kann unterschiedlich vorgenommen werden: So kann z. B. eine Sektornummer in der Ladezustandsinformation darüber Auskunft geben, welcher fortlaufende Speichersektor bereits beschrieben wurde. Ebenfalls ist eine Liste von beschriebenen Speichersektoren möglich. Es ist jedoch auch möglich anhand der in der Ladezustandsinformation bereits enthaltenen Startadresse und Endadresse dynamisch den entsprechenden Speichersektor zu ermitteln. Außerdem können eine weitere Startadresse und Endadresse persistent gespeichert werden, die das zuletzt geschriebenen Datenpaket kennzeichnen.

Auf diese Weise identifiziert die Ladezustandsinformation immer ein Datenpaket, das einen kritischen Abschnitt im Falle eines Abbruchs der Übertragung zwischen der Datenzentrale 102 und der Frankiermaschine 103 markiert. Im Falle eines Abbruchs der Übertragung, muss in Abhängigkeit von der Ladezustandsinformation ermittelt werden, welche Datenpakete zwingend wiederholt übertragen werden müssen.

Da ein Abbruch der Übertragung beim Speichern der Datenpakete zu beliebigen, nicht definierten Zuständen im zuletzt beschriebenen Adressraum führen kann, muss - bedingt durch die verwendete segmentweise organisierte Speicher-Technologie - der zuletzt beschriebene Speichersektor gelöscht werden. Da die Sektorgrenzen der Speichersektoren 103.11 bis 103.15 nicht zwingend mit den Grenzen der Datenpakete 106.1 bis 106.7 übereinstimmen, gehen unter Umständen durch den Löschvorgang eines Speichersektors mehrere bereits erfolgreich übertragene Datenpakete ganz oder teilweise verloren.

Da die Ladezustandsinformation immer ein Datenpaket identifiziert, das als erstes einen zuvor gelöschten Speichersektor beschrieben hat, und die Datenpakete stets eine vorgegebene Abfolge der Stadtadressen aufweisen (im vorliegenden Beispiel streng monoton steigend in ihren Startadressen sind), ist dieses durch die Ladezustandsinformation identifizierte Datenpaket ein sicherer Kandidat für eine Fortführung der Übertragung.

Im vorliegenden Beispiel soll in einem vorangegangenen Ladeschritt während der Übertragung des Datenpakets 106.4 (DP 4) ein Abbruch der Übertragung stattgefunden haben. Die Ladezustandsinformation gibt daher, wie oben erläutert wurde, zunächst die Startadresse und die Endadresse des Datenpakets 106.3 (DP 3) wieder. In dem Schritt 105.8 werden daher die Speichersektoren 103.12 bis 103.15 gelöscht. Die Übertragung der Datenpakete beginnt in dem Schritt 105.9 dann mit dem Datenpaket 106.3 (DP 3).

Es versteht sich hierbei, dass beim Speichern des Datenpakets 106.3 (DP 3) der in dem Speichersektor 103.11 liegende Teil des Datenpakets 106.3 (DP 3) erkannt und beim Speichern berücksichtigt wird, sodass das Datenpaket 106.3 (DP 3) in dem Speichersektor 103.12 wieder exakt fortgeführt wird. Es versteht sich weiterhin, dass für den Fall, dass die verwendete Speicher-Technologie ein solches Vorgehen nicht unterstützt, eine entsprechende Modifikation der Erfassung der Ladezustandsinformation vorgenommen werden muss. Bevorzugt ist dann vorgesehen, dass die Ladezustandsinformation dann nur solche Datenpakete identifiziert, deren Startadresse ebenfalls in einem Speichersektor liegt, der als erstes durch dieses Datenpaket beschrieben wird.

Falls nicht bekannt ist, welche Speichersektoren des Speichers 103.2 bereits beschrieben wurden, sollten bei Fortführung der Übertragung alle Speichersektoren zwischen einem Interim-Start-Sektor und einem Interim-End-Sektor gelöscht werden. Der Interim-End-Sektor, also der letzte zu löschende Speichersektor wird wie bisher mit Hilfe der im Paketierungskopf 106.8 enthaltenen Endadresse des Firmware-Pakets 106 ermittelt. Der Interim-Start-Sektor ist der Sektor, der die Endadresse aus der Ladezustandsinformation umfasst.

Wurde die Ladezustandsinformation in dem Schritt 105.13 aktualisiert, wird von der Frankiermaschine 103 noch eine Bestätigung an den Server der Datenzentrale 102 übermittelt, die einen erfolgreiche Abarbeitung des betreffenden Datenpakets signalisiert.

Anschließend wird in einem Schritt 105.14 überprüft, ob noch ein weiteres Datenpaket zur Übertragung ansteht. Ist dies der Fall, wird zum Schritt 105.9 zurück gesprungen und mit dem nächsten Datenpaket in der oben beschriebenen Weise fortgefahren.

Dabei werden nach dem erfolgreichen Speichern des letzten Datenpakets 106.7 des Firmware-Pakets 106 in dem Schritt 105.13 die Startadresse und die Endadresse der Ladezustandsinformation auf eine vorgegebene zweite Kennzeichung gesetzt, welche einen erfolgreichen Abschluss des die Schritte 105.9 bis 105.14 umfassenden Ladeschritts 105.15 kennzeichnen.

Die Frankiermaschine empfängt nun der Reihe nach alle Datenblöcke. Jeder dieser Datenblöcke wird analysiert, gespeichert, ein Ladezustand fortgeschrieben und nach erfolgreicher Abarbeitung, diese, dem Server bestätigt. Dieser Vorgang wird wiederholt, bis alle Datenblöcke erfolgreich vom Server an die Frankiermaschine übertragen und von dieser bestätigt wurden. Zuletzt wird von der Frankiermaschine der Ladezustand verifiziert und als gültig markiert. Bei dieser Markierung wird u.a. in die Startadresse die spezielle Ende-Kennung geschrieben.

Sind alle Datenblöcke übertragen worden, so wird die Frankiermaschine 103 durch den Server der Datenzentrale 102 aufgefordert in einem Schritt 105.16 eine abschließende Überprüfung bzw. Verifikation auszuführen. Hierzu vergleicht die Frankiermaschine 103 den CRC aus dem Paketierungskopf 106.8 mit dem CRC den sie nach dem oben angegebenen Verfahren über den gesamten Adressraum ermittelt hat. Diese müssen im vorliegenden Beispiel für einen erfolgreiche Überprüfung identisch sein.

Ferner wird der ebenfalls ermittelte HASH und die im Paketierungskopf 106.8 enthaltene digitale Signatur genutzt, um die Übertragung mit Hilfe eines bekannten Schlüssels zu verifizieren.

Sind beide Prüfungen erfolgreich, so wird das Ergebnis dem Server der Datenzentrale 102 durch die Frankiermaschine 103 bestätigt und die Übertragung und die Verbindung werden in einem Schritt 105.17 beendet.

Der erreichte Zustand des ablaufenden Dienstes wird dem Benutzer der Frankiermaschine 103 über die Benutzerschnittstelle 103.5 angezeigt. Es versteht sich, dass eine solche Anzeige auch kontinuierlich, beispielsweise als Fortschrittsanzeige erfolgen kann.

Abhängig vom eingesetzten Verfahren wird entweder nachfolgend direkt die neue Firmware ausgeführt oder, wie im vorliegenden Beispiel, in den Ladeteil verzweigt. Im letzteren Fall organisiert der Ladeteil zunächst den Speicher 103.2 entsprechend um, indem die Datenpakete 106.1 bis 106.7 vom Zwischenspeicher 103.9 (gegebenenfalls dekomprimiert und) in den für sie vorgesehenen Adressraum in den Speicherbereich 103.8 für den Hauptfunktionsteil kopiert werden. Dieser Vorgang kann jederzeit Unterbrochen werden, da er beliebig oft und insbesondere ohne hohen Zeitaufwand wiederholt werden kann.

In einem Schritt 105.18 wird dann überprüft, ob der Verfahrensablauf beendet werden soll. Ist dies nicht der Fall, wird zurück zu dem Schritt 105.2 gesprungen. Andernfalls wird der Verfahrensablauf in einem Schritt 105.19 beendet.

Es versteht sich, dass das vorstehend beschriebenen Verfahren mit der Zwischenspeicherung der Datenpakete in dem Zwischenspeicher 103.9 entsprechend viel persistenten Speicher benötigt. Es ermöglicht aber die Abarbeitung der Übertragung unter Verwendung des aktuellen Hauptfunktionsteils der Firmware, da dieser nicht während der Übertragung überschrieben wird. Es versteht sich jedoch, dass bei anderen Varianten der Erfindung eine Abarbeitung der Übertragung unter Verwendung des Ladeteils der Firmware ebenfalls möglich ist. Letztere Ausführung erhöht den Ladeteil der Firmware, erfordert jedoch keinen Zwischenspeicher, da direkt in den gewünschten persistenten Speicher (adressiert durch Startadresse der jeweiligen Datenblöcke) gespeichert werden kann ohne Firmware zu überschreiben, auf die zur Abarbeitung der Übertragung zugegriffen wird bzw. zugegriffen werden muss.

Es sei and dieser Stelle erwähnt, dass die vorstehend beschriebenen Speicher des Sicherheitsmoduls 105 bzw. des Basismoduls 104 alle oder zum Teil sowohl als separate Speichermodule als auch lediglich als einzelne Speicherbereiche eines einzigen Speichermoduls ausgebildet sein können.

Weiterhin sei an dieser Stelle erwähnt, dass die vorliegende Erfindung vorstehend zwar ausschließlich am Beispiel einer Frankiermaschine beschrieben wurde. Es versteht sich jedoch, dass sie sich jedoch auch in Zusammenhang mit beliebigen anderen eingebetteten Systemen einsetzen lässt.

## Patentansprüche

1. Verfahren zum Laden von Daten von einer Sendereinrichtung in einen nicht-flüchtigen, nur sektorweise löschbaren Speicher (103.6, 103.9) einer mit der Sendereinrichtung (102) verbindbaren Empfängereinrichtung (103), bei dem
- in einem Aufteilungsschritt die zu ladenden Daten von der Sendereinrichtung (102) in eine Mehrzahl von Datenpaketen (106.1 bis 106.7) aufgeteilt werden und
- in einem Ladeschritt (105.15) zumindest ein Teil der Datenpakete (106.1 bis 106.7) in den Speicher (103.6, 103.9) geladen wird,
**dadurch gekennzeichnet, dass**
- in einem Überprüfungsschritt (105.3), der vor dem Ladeschritt (105.15) durchgeführt wird, ein aktueller Ladezustand des Speichers (103.6, 103.9) überprüft wird, wobei der aktuelle Ladezustand wiedergibt, ob bereits zumindest ein Teil der Datenpakete (106.1 bis 106.7) in einem vorhergehenden Ladeschritt (105.15) erfolgreich in den Speicher (103.6, 103.9) geladen wurde, und
- die in dem Ladeschritt (105.15) in den Speicher (103.6, 103.9) zu ladenden Datenpakete (106.1 bis 106.7) in Abhängigkeit von dem aktuellen Ladezustand ermittelt werden.

2. Verfahren nach Anspruch 1, **dadurch gekennzeichnet, dass** in dem Ladeschritt
- in Abhängigkeit von dem aktuellen Ladezustand des Speichers (103.6, 103.9) zumindest ein Speichersektor (103.12 bis 103.15) des Speichers (103.6, 103.9) gelöscht wird und
- neben den für den gelöschten Speichersektor (103.12 bis 103.15) vorgesehenen Datenpaketen (106.3, 106.4) ausschließlich diejenigen Datenpakete (106.5 bis 106.7) übermittelt und in den Speicher (103.6, 103.9) geladen werden, welche noch nicht erfolgreich in den Speicher (103.6, 103.9) geladen wurden.

3. Verfahren nach Anspruch 1 oder 2, **dadurch gekennzeichnet, dass** in dem Ladeschritt (105.15) nach einem, insbesondere jedem, erfolgreichen Laden eines Datenpakets (106.1 bis 106.7) in den Speicher (103.6, 103.9) eine den aktuellen Ladezustand des Speichers (103.6, 103.9) kennzeichnende Ladezustandinformation nicht-flüchtig gespeichert wird, wobei die Ladezustandsinformation insbesondere in dem Speicher (103.6, 103.9) gespeichert wird.

4. Verfahren nach Anspruch 3, **dadurch gekennzeichnet, dass** in dem Ladeschritt (105.15) nach dem erfolgreichen Laden des letzten Datenpakets (106.7) eine den erfolgreichen Abschluss des Ladeschritts (105.15) kennzeichnende Ladezustandsinformation gespeichert wird.

5. Verfahren nach einem der vorhergehenden Ansprüche, **dadurch gekennzeichnet, dass**
- zur Überprüfung des aktuellen Ladezustands eine Ladezustandsinformation abgefragt wird, wobei
- die Ladezustandsinformation zumindest in Verbindung mit einer weiteren Ladeinformation zumindest ein, insbesondere das letzte, in dem vorhergehenden Ladeschritt (105.15) erfolgreich in den Speicher (103.6, 103.9) geladenes Datenpaket (106.3) identifiziert.

6. Verfahren nach Anspruch 5, **dadurch gekennzeichnet, dass** die Ladezustandsinformation zumindest eine Speicheradresse eines in dem vorhergehenden Ladeschritt (105.15) erfolgreich in den Speicher (103.6, 103.9) geladenen Datenpakets (106.3), insbesondere eine Speicheradresse des letzten in dem vorhergehenden Ladeschritt (105.15) erfolgreich in den Speicher (106.1 bis 106.7) geladenen Datenpakets (106.3), umfasst.

7. Verfahren nach Anspruch 5 oder 6, **dadurch gekennzeichnet, dass** die Ladezustandsinformation
- eine Startadresse eines in dem vorhergehenden Ladeschritt (105.15) erfolgreich in den Speicher (103.6, 103.9) geladenen Datenpakets (106.3), insbesondere eine Startadresse des letzten in dem vorhergehenden Ladeschritt (105.15) erfolgreich in den Speicher (103.6, 103.9) geladenen Datenpakets (106.3), umfasst, und
- insbesondere eine Endadresse und/oder einer Größeninformation dieses in dem vorhergehenden Ladeschritt (105.15) erfolgreich in den Speicher (103.6, 103.9) geladenen Datenpakets (106.3) umfasst.

8. Verfahren nach einem der vorhergehenden Ansprüche, **dadurch gekennzeichnet, dass**
- in dem Überprüfungsschritt (105.3) ein Versionsvergleich der Version der aktuell in den Speicher (103.6, 103.9) geladenen Daten und der Version der in den Speicher (103.6, 103.9) zu ladenden Daten erfolgt und
- der Ladeschritt (105.15) nur durchgeführt wird, wenn die Version der in den Speicher (103.6, 103.9) zu ladenden Daten aktueller ist als die Version der aktuell in den Speicher (103.6, 103.9) geladenen Daten und/oder eine den Ladeschritt (105.15) auslösende Ladeanweisung vorliegt.

9. Verfahren nach einem der vorhergehenden Ansprüche, **dadurch gekennzeichnet, dass**
- die Sendereinrichtung (102) vor dem Ladeschritt (105.15) zumindest einem Teil der zu ladenden Daten, insbesondere zumindest einen Teil der Datenpakete (106.1 bis 106.7), Prüfdaten zuordnet und
- die Empfängereinrichtung (103) die Vollständigkeit und/oder Integrität und/oder Authentizität der zu ladenden Daten unter Verwendung der Prüfdaten verifiziert.

10. Verfahren nach einem der vorhergehenden Ansprüche, **dadurch gekennzeichnet, dass** zumindest ein Teil der zu ladenden Daten von der Sendereinrichtung (102) an die Empfängereinrichtung (103) in komprimierter Form übermittelt wird.

11. Verfahren nach einem der vorhergehenden Ansprüche, **dadurch gekennzeichnet, dass**
- die Aufteilung der zu ladenden Daten in Datenpakete (106.1 bis 106.7) in dem Aufteilungsschritt in Abhängigkeit von der Verbindung zwischen der Sendereinrichtung (102) und der Empfängereinrichtung (103) erfolgt, wobei
- insbesondere eine Kompression zumindest eines Teils der zu ladenden Daten erfolgt.

12. Verfahren nach einem der vorhergehenden Ansprüche, **dadurch gekennzeichnet, dass** die zu ladenden Daten zumindest einen Teil der Firmware der Empfängereinrichtung (103) darstellen und
- das jeweilige Datenpaket (106.1 bis 106.7) in dem Ladeschritt (105.15) unmittelbar an seine endgültige Position in den Speicher (103.6, 103.9) geschrieben wird oder
- das jeweilige Datenpaket (106.1 bis 106.7) in dem Ladeschritt (105.15) zunächst in einen Zwischenspeicherbereich (103.9) des Speichers (103.6, 103.9) geschrieben wird.

13. Verfahren nach einem der vorhergehenden Ansprüche, **dadurch gekennzeichnet, dass** in dem Ladeschritt (105.15) vor dem Laden des ersten Datenpakets (106.3) der Mehrzahl von Datenpaketen (106.1 bis 106.7) zumindest der Speichersektor (103.12) gelöscht wird, in welchen zumindest ein erster Teil des ersten Datenpakets (106.3) zu laden ist.

14. Verfahren nach Anspruch 13, **dadurch gekennzeichnet, dass**
- die Sendereinrichtung (102) in Abhängigkeit von dem aktuellen Ladezustand des Speichers (103.6, 103.9) eine Löschinformation generiert, welche die vor oder in dem Ladeschritt (105.15) zu löschenden Speichersektoren (103.12 bis 103.15) des Speichers (103.6, 103.9) identifiziert,
- die Sendereinrichtung (102) die Löschinformation an die Empfängereinrichtung (103) übermittelt und
- vor oder in dem Ladeschritt (105.15) in Abhängigkeit von der Löschinformation Speichersektoren (103.12 bis 103.15) des Speichers (103.6, 103.9) gelöscht werden.

15. Verfahren nach Anspruch 14, **dadurch gekennzeichnet, dass**
- der aktuelle Ladezustand durch eine Ladezustandsinformation repräsentiert ist, die zumindest in Verbindung mit einer weiteren Ladeinformation zumindest ein in dem vorhergehenden Ladeschritt (105.15) in den Speicher (103.6, 103.9) geladenes erstes Datenpaket (106.3) identifiziert, welches
- als letztes erfolgreich in den Speicher (103.6, 103.9) geladen wurde und
- als erstes in einen zuvor gelöschten ersten Speichersektor (103.12) geschrieben wurde, wobei
- insbesondere die Startadresse des ersten Datenpakets in dem ersten Speichersektor liegt, und
- die Löschinformation zumindest den ersten Speichersektor (103.12) identifiziert.

16. Anordnung zum Laden von Daten von einer Sendereinrichtung (102) in einen nicht-flüchtigen, nur abschnittsweise löschbaren Speicher (103.6, 103.9) einer mit der Sendereinrichtung (102) verbindbaren Empfängereinrichtung (103), wobei
- die Sendereinrichtung (102) zum Aufteilen der zu ladenden Daten in eine Mehrzahl von Datenpaketen (106.1 bis 106.7) ausgebildet ist und
- die Empfängereinrichtung (103) zum Empfang und zum Laden zumindest eines Teils der Datenpakete (106.1 bis 106.7) in einem Ladeschritt (105.15) in den Speicher (103.6, 103.9) ausgebildet ist,
**dadurch gekennzeichnet, dass**
- die Empfängereinrichtung (103) zur Übermittlung eines aktuellen Ladezustands des Speichers (103.6, 103.9) an die Sendereinrichtung (102) ausgebildet ist, wobei der aktuelle Ladezustand wiedergibt, ob bereits zumindest ein Teil der Datenpakete (106.1 bis 106.7) in einem vorhergehenden Ladeschritt (155) erfolgreich in den Speicher (103.6, 103.9) geladen wurde, und
- die Sendereinrichtung (102) zur Ermittlung der an die Empfängereinrichtung (103) zu übermittelnden und/oder in dem Ladeschritt (105.15) in den Speicher (103.6, 103.9) zu ladenden Datenpakete (106.1 bis 106.7) in Abhängigkeit von dem aktuellen Ladezustand ausgebildet ist.

17. Anordnung nach Anspruch 16, **dadurch gekennzeichnet, dass**
- die Empfängereinrichtung (103) dazu ausgebildet ist, in Abhängigkeit von dem aktuellen Ladezustand des Speichers (103.6, 103.9) zumindest einen Speichersektor (103.12 bis 103.15) des Speichers (103.6, 103.9) zu löschen und
- die Sendereinrichtung (102) dazu ausgebildet ist, neben den für den gelöschten Speichersektor (103.12 bis 103.15) vorgesehenen Datenpaketen (106.3, 106.4) ausschließlich diejenigen Datenpakete (106.5 bis 106.7) an die Empfängereinrichtung (103) zu übermitteln, welche noch nicht erfolgreich in den Speicher (103.6, 103.9) geladen wurden.

18. Anordnung nach Anspruch 16 oder 17, **dadurch gekennzeichnet, dass** die Empfängereinrichtung (103) dazu ausgebildet ist, nach einem, insbesondere jedem, erfolgreichen Laden eines Datenpakets (106.1 bis 106.7) in den Speicher (103.6, 103.9) eine den aktuellen Ladezustand des Speichers (103.6, 103.9) kennzeichnende Ladezustandinformation nicht-flüchtig zu speichern, wobei die Ladezustandsinformation insbesondere in dem Speicher (103.6, 103.9) gespeichert wird.

19. Anordnung nach Anspruch 18, **dadurch gekennzeichnet, dass** die Empfängereinrichtung (103) dazu ausgebildet ist, nach dem erfolgreichen Laden des letzten Datenpakets (106.7) eine den erfolgreichen Abschluss des Ladeschritts (105.15) kennzeichnende Ladezustandsinformation zu speichern.

20. Anordnung nach einem der Ansprüche 16 bis 19, **dadurch gekennzeichnet, dass** die Ladezustandsinformation zumindest in Verbindung mit einer weiteren Ladeinformation zumindest ein, insbesondere das letzte, in dem vorhergehenden Ladeschritt erfolgreich in den Speicher (103.6, 103.9) geladenes Datenpaket (106.3) identifiziert.

21. Anordnung nach Anspruch 20, **dadurch gekennzeichnet, dass** die Ladezustandsinformation zumindest eine Speicheradresse eines in dem vorhergehenden Ladeschritt (105.15) erfolgreich in den Speicher (103.6, 103.9) geladenen Datenpakets (106.3), insbesondere eine Speicheradresse des letzten in dem vorhergehenden Ladeschritt (105.15) erfolgreich in den Speicher (103.6, 103.9) geladenen Datenpakets (106.3), umfasst.

22. Anordnung nach Anspruch 20 oder 21, **dadurch gekennzeichnet, dass** die Ladezustandsinformation
- eine Startadresse eines in dem vorhergehenden Ladeschritt (105.15) erfolgreich in den Speicher (103.6, 103.9) geladenen Datenpakets (106.3), insbesondere eine Startadresse des letzten in dem vorhergehenden Ladeschritt (105.15) erfolgreich in den Speicher (103.6, 103.9) geladenen Datenpakets (106.3), umfasst, und
- insbesondere eine Endadresse und/oder einer Größeninformation dieses in dem vorhergehenden Ladeschritt (105.15) erfolgreich in den Speicher (103.6, 103.9) geladenen Datenpakets (106.3) umfasst.

23. Anordnung nach einem der Ansprüche 16 bis 22, **dadurch gekennzeichnet, dass** die Sendereinrichtung (102) dazu ausgebildet ist,
- einen Versionsvergleich der Version der aktuell in den Speicher (103.6, 103.9) geladenen Daten und der Version der in den Speicher (103.6, 103.9) zu ladenden Daten vorzunehmen, und
- den Ladeschritt (105.15) nur auszulösen, wenn die Version der in den Speicher zu ladenden Daten aktueller ist als die Version der aktuell in den Speicher geladenen Daten und/oder eine den Ladeschritt (105.15) auslösende Ladeanweisung vorliegt.

24. Anordnung nach einem der Ansprüche 16 bis 23, **dadurch gekennzeichnet, dass**
- die Sendereinrichtung (102) dazu ausgebildet ist, vor dem Ladeschritt (105.15) zumindest einem Teil der zu ladenden Daten, insbesondere zumindest einen Teil der Datenpakete (106.1 bis 106.7), Prüfdaten zuzuordnen und
- die Empfängereinrichtung (103) dazu ausgebildet ist, die Vollständigkeit und/oder Integrität und/oder Authentizität der zu ladenden Daten unter Verwendung der Prüfdaten zu verifizieren.

25. Anordnung nach einem der Ansprüche 16 bis 24, **dadurch gekennzeichnet, dass** die Sendereinrichtung (102) dazu ausgebildet ist, zumindest einen Teil der zu ladenden Daten in komprimierter Form an die Empfängereinrichtung (103) zu übermitteln.

26. Anordnung nach einem der Ansprüche 16 bis 25, **dadurch gekennzeichnet, dass** die Sendereinrichtung (102) dazu ausgebildet ist,
- die Aufteilung der zu ladenden Daten in Datenpakete (106.1 bis 106.7) in Abhängigkeit von der Verbindung zwischen der Sendereinrichtung (102) und der Empfängereinrichtung (103) vorzunehmen, wobei
- insbesondere eine Kompression zumindest eines Teils der zu ladenden Daten erfolgt.

27. Anordnung nach einem der Ansprüche 16 bis 26, **dadurch gekennzeichnet, dass** die zu ladenden Daten zumindest einen Teil der Firmware der Empfängereinrichtung (103) darstellen und die Empfängereinrichtung (103) dazu ausgebildet ist,
- das jeweilige Datenpaket (106.1 bis 106.7) in dem Ladeschritt (105.15) unmittelbar an seine endgültige Position in den Speicher (103.6, 103.9) zu schreiben oder
- das jeweilige Datenpaket (106.1 bis 106.7) in dem Ladeschritt (105.15) zunächst in einen Zwischenspeicherbereich (103.9) des Speichers (103.6, 103.9) zu schreiben.

28. Anordnung nach einem der Ansprüche 16 bis 27, **dadurch gekennzeichnet, dass** die Empfängereinrichtung (103) dazu ausgebildet ist, vor oder in dem Ladeschritt (105.15) vor dem Laden des ersten Datenpakets (106.3) der Mehrzahl von Datenpaketen (106.1 bis 106.7) zumindest den Speichersektor (103.12 bis 103.15) zu löschen, in welchen zumindest ein erster Teil des ersten Datenpakets (106.3) zu laden ist.

29. Anordnung nach Anspruch 28, **dadurch gekennzeichnet, dass**
- die Sendereinrichtung (102) dazu ausgebildet ist,
- in Abhängigkeit von dem übermittelten aktuellen Ladezustand des Speichers (103.6, 103.9) eine Löschinformation zu generieren, welche die vor oder in dem Ladeschritt (105.15) zu löschenden Speichersektoren (103.12 bis 103.15) des Speichers (103.6, 103.9) identifiziert, und
- die Löschinformation an die Empfängereinrichtung (103) zu übermitteln, sowie
- die Empfängereinrichtung (103) dazu ausgebildet ist, vor oder in dem Ladeschritt (105.15) in Abhängigkeit von der Löschinformation Speichersektoren (103.12 bis 103.15) des Speichers (103.6, 103.9) zu löschen.

30. Anordnung nach Anspruch 29, **dadurch gekennzeichnet, dass**
- der aktuelle Ladezustand durch eine Ladezustandsinformation repräsentiert ist, die zumindest in Verbindung mit einer weiteren Ladeinformation zumindest ein in dem vorhergehenden Ladeschritt (105.15) in den Speicher (103.6, 103.9) geladenes erstes Datenpaket (106.3) identifiziert, welches
- als letztes erfolgreich in den Speicher (103.6, 103.9) geladen wurde und
- als erstes in einen zuvor gelöschten ersten Speichersektor (103.12) geschrieben wurde, wobei
- insbesondere die Startadresse des ersten Datenpakets in dem ersten Speichersektor liegt, und
- die Löschinformation zumindest den ersten Speichersektor (103.12) identifiziert.

31. Anordnung nach einem der Ansprüche 16 bis 30, **dadurch gekennzeichnet, dass**
- die Empfängereinrichtung (103) eine Frankiermaschine ist
und/oder
- die Sendereinrichtung (102) eine entfernte Datenzentrale ist.

32. Datenverarbeitungseinrichtung, **dadurch gekennzeichnet, dass** sie als Sendereinrichtung (102) oder Empfängereinrichtung (103) einer Anordnung (101) nach einem der Ansprüche 16 bis 31 ausgebildet ist.
